# EUROPEAN PATENT SPECIFICATION

(11) **EP 0 904 193 B1**
(45) Date of publication and mention of the grant of the patent: **25.07.2001**
(21) Application number: 97916593.3
(22) Date of filing: 25.04.1997
(51) Int. Cl.: B31B 3/46, B31B 3/64

(54) **MACHINE FOR PRODUCING BOX CONTAINERS FROM BLANKS OF SYNTHETIC RESIN**
VORRICHTUNG ZUR HERSTELLEN VON VERPACKUNGSBEHÄLTERN AUS ZUSCHNITTEN AUS KUNSTHARZ
MACHINE POUR PRODUIRE DES BOITES A PARTIR D'EBAUCHES EN RESINE SYNTHETIQUE

(30) Priority: 30.04.1996 IT BO960229
(43) Date of publication of application: 31.03.1999
(73) Proprietor: Studio Vame S.R.L., 40026 Imola (IT)
(72) Inventor: VALENTI, Dante, I-40026 Imola (IT)
(74) Representative: Dall'Olio, Giancarlo
(86) International application number: IB9700440
(87) International publication number: WO9740977

(56) References cited:
- EP-A- 0 661 211
- GB-A- 898 960
- IT-B- 1 257 785
- US-A- 2 818 484
- US-A- 3 801 266
- US-A- 4 581 005

## Description

### BACKGROUND OF THE INVENTION

The present invention relates to production of box containers from blanks of synthetic resin.

### DESCRIPTION OF THE PRIOR ART

As it is known, at present, open box containers are usually obtained from a flat blank with suitable longitudinal and transversal creasing lines, which define folding lines for the container.

In particular, these creasing lines define the bottom, the sides and the heads of a box container and form also four folds, connected in pairs to the heads by longitudinal creasing lines, so as to form, near the corners of the container, respective tubular stiffening elements, of triangular section.

Due to these stiffening elements, the container is appropriately resistant to crushing.

Usually, each of these stiffening elements is formed by three consecutive flaps, arranged angularly one to another and obtained by other longitudinal creasing lines made in the above mentioned folds.

In a known embodiment, for example, the internal flap is folded perpendicular to the head and attached to a side of the box being formed, then the intermediate flap is folded slant toward the head and the outer flap is folded, in direction opposite the corner formed by the side and head, and made integral with the corresponding head of the container.

Known machines for production of the aforementioned containers withdraw, stepwise one by one, the blanks from a magazine and then transport them through a series of intermediate stations, in which a plurality of folding means are situated.

In this way, the blanks arrive at a final forming station, provided with further folding means, where the container forming operation is completed.

The aforementioned folding means define, in suitable time relation, the sides and the heads of the container, as well as the tubular stiffening elements.

In the final configuration, some parts of the blank are superimposed and are mutually fastened, so that the container maintains the desired form.

The surfaces of the parts to be joined are usually glued together.

However, this brings about some drawbacks.

In fact, It is known that the gluing operation requires a predetermined time, thus provoking slowing down of the blank convey towards the working stations of the machine, lowering the production capacity.

Moreover, the application of glue can make it difficult to recycle completely the container after use.

This is particularly disadvantageous in box containers made of plastic materials, such as synthetic resins.

In fact, one of the advantages deriving form the use of the aforementioned plastic materials is the possibility of their complete recycling, which from one side reduces the impact on the environment, and from the other side makes the containers cheaper.

It is also known that containers made of synthetic resin can be heat-welded by ultrasounds devices.

However, the drawback of this technique is an undesired look of the container.

A method for mutual fastening of elements made of synthetic resin, which avoids the above mentioned problems, has been described in the document WO-A-96/23646 (No. PCT/IB96/00069), of the same Applicant.

According to this method, surfaces to be joined are conducted near to heating means, which heat them uniformly until a predetermined temperature is reached; then the above mentioned surfaces are drawn one to the other and, finally presser means are applied thereto on the outside so as to uniformly press them for a predetermined time, in order to join them by heat-welding.

The US-A-2.818.484 relates to box making machinery, particularly to machine for making boxes from thermoplastic sheet material. A blank provided with flaps and tabs is erected and then the tabs are welded to contiguous portions of the flaps by means of electrodes arranged in pairs at each corner of the box being formed. While activated, the electrodes exert a clamping action upon the portions and tabs attached thereto. Heat for welding is obtained by means of high frequency impulses generated by a suitable electronic device.

The machinery disclosed in the US-A-2.818.484 is expensive, complicated and easily subjected to failure, because of the presence of sophisticated devices for creating the high frequency current, and also because all the measures to be taken when working with high frequency current.

The US-A-3.801.266 describes a machine for conveying container bodies formed from paperboard. The blanks have applied thereto a material that makes them capable of being welded by application of heat. The machine includes a nozzle for directing heated air against the surfaces to be welded. An external source provides hot air for welding. Also this machine is expensive and complicated, because it uses an external source of heat air, so that particular means are necessary to divert hot air when the conveyor ceases its motion, not to overheat the container being welded. These means include a valve operated by a solenoid. Moreover, the external source causes heat leakage, so that a higher temperature is necessary to obtain the suitable heating of the surfaces to be welded, thus increasing the risk of overheating.

The heating device disclosed in the US-A-3.801.266 is used to produce box containers in which the flaps are secured to the box bodies with the help of a heat activatable coating. The temperature reached by the heating device is low, because of the air diversion provided between the hot air generator and the nozzle. This device could not be used for securing the flaps to the box body without heat activatable glue.

Therefore, the technical problem still unsolved is that producing box containers without using other additional materials, such as glue, in a simple and practical way and without complicated and expensive devices.

The solution of this technical problem is not possible with the inventions described in the prior art. The invention claimed herein aims at solving this technical problem.

### SUMMARY OF THE INVENTION

The object of the present invention is to propose a machine which produces box containers from blanks without using other materials, in particular forming stiffening elements for the containers in a simple and practical way, that means without complicated and expensive devices which have at the same time high production capacity and small dimensions. This is obtained by means of heating means reduced in their dimension because of a more compacted form and more effective working, with particular reference to the heated air external source of the prior art.

The above mentioned object is achieved in a machine for producing box containers obtained from flat blanks of synthetic resin which feature longitudinal and transversal creasing lines, transversal splits forming a bottom, sides and heads of a box container, as well as four folding portions, pairs of which are connected to said heads by longitudinal creasing lines, with each folding portion having two longitudinal creasing lines which define three subsequent flaps inner, central and outer, respectively, the machine including:
a magazine for a pack of blanks ;
gripping means for intermittent transferring a base blank of the pack to a withdrawing station ;
conveying means which transport the blank from said withdrawing station to a final forming station through at least one intermediate station ;
handling means, located in the intermediate station, which fold said flaps of said folding portions along relative creasing lines, with said outer flaps drawn close to said corresponding areas of the front and back heads, so as to form relative stiffening tubular elements;
heating means, featuring a heating body and located in the intermediate station, provided for supplying a flow of hot air and raising the temperature of the outer flaps of the folding portions and corresponding areas of the front and back heads of the blank to a predetermined value;
presser means, which press said outer flaps drawn close to corresponding areas of the front and back heads by said handling
means, so as to join them by heat-welding,
by providing said heating body formed by a case, defining a labyrinth-like path along which the air to be heated passes, and featuring inside a resistor, through which said flow of air passes.

### BRIEF DESCRIPTION OF THE DRAWINGS

- fig. 1 shows a plan views of a flat blank of synthetic resin, from which a box container can be obtained;
- fig. 1a shows a prospective view of a tubular stiffening element of the above mentioned box container;
- fig. 2 shows a schematic plan view of the proposed machine;
- fig. 3 shows a schematic front view of first heating means situated in a first forming station of said machine;
- fig. 4 shows a corresponding side view of said first heating means;
- fig. 5 shows a prospective view of an area of said first forming station situated downstream of the aforementioned first heating means;
- fig. 6 shows a longitudinal section view of a detail of said heating means;
- figs. 7 and 8 show a front and a side view, respectively, of a different embodiment of said first heating means;
- figs. 9 and 10 show corresponding front and lateral views of second heating means situated in a second forming station of the machine;
- fig. 11 shows a partial prospective view of a final box container forming station in the machine being the subject of the present invention;
- fig. 12 shows a corresponding prospective view of a different embodiment of said final forming station;
- fig. 13 shows a plan view of another flat blank of synthetic resin, from which a box container can be obtained;
- fig. 14 shows a prospective view of a tubular element for enlarging a box container obtained from a blank of fig. 13.

### BEST MODE OF CARRYING OUT THE INVENTION

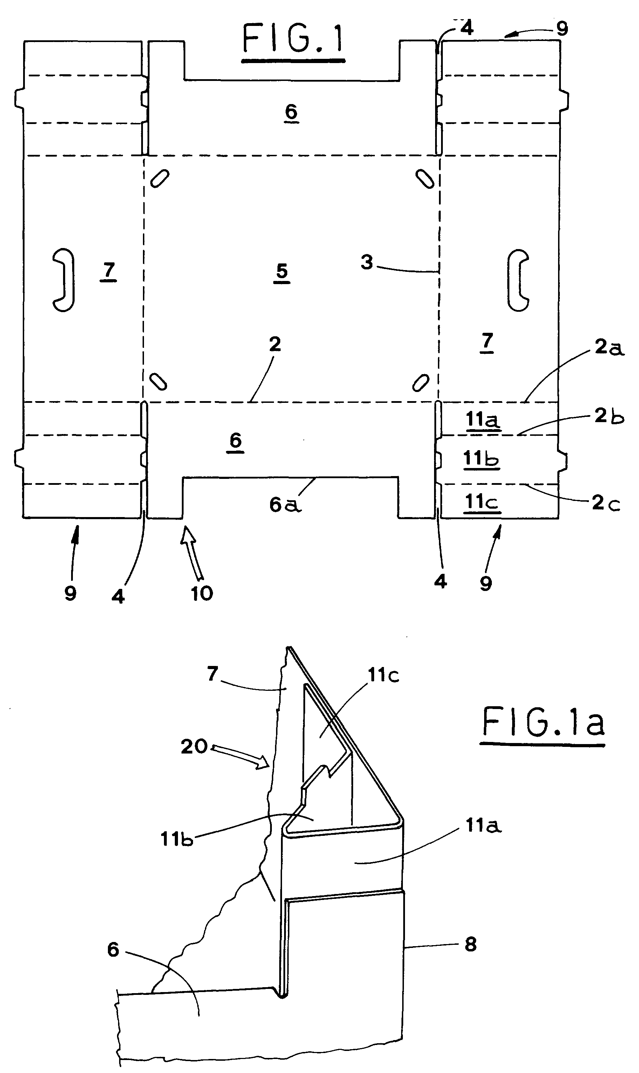

With reference first to figures 1 and 1a, a flat blank, obtained from a full or cell-like sheet of synthetic resin, is indicated with 10.

This blank has longitudinal and transversal creasing lines 2, 3 and transversal splits 4 forming the bottom 5, the sides 6 and the heads 7 of a relative box container.

The extensions 2a of the longitudinal creasing lines 2 defining the corners 8 of the box container form four folds 9, pairs of which are connected to said heads 7.

Each fold 9 features two longitudinal creasing lines 2b, 2c defining three consecutive flaps 11a, 11b, 11c, inner, central and outer, respectively.

The inner flap 11a, as will be pointed out in the following, is folded along the creasing 2a, at a right angle with respect to the relative head 7.

The central flap 11b is folded about the creasing 2b so as to define an acute angle with respect to the inner flap 11a.

The outer flap 11c is folded along the creasing line 2c, preferably in the direction opposite to the corner 8.

This flap 11c is fastened to the relative head 7, as will be described in detail in the following, so as to define a tubular stiffening element, indicated with 20.

The relative side 6 is fastened to the inner flap 11a, as will be described in detail in the following.

Near its external edge, this side 6 features an opening 6a.

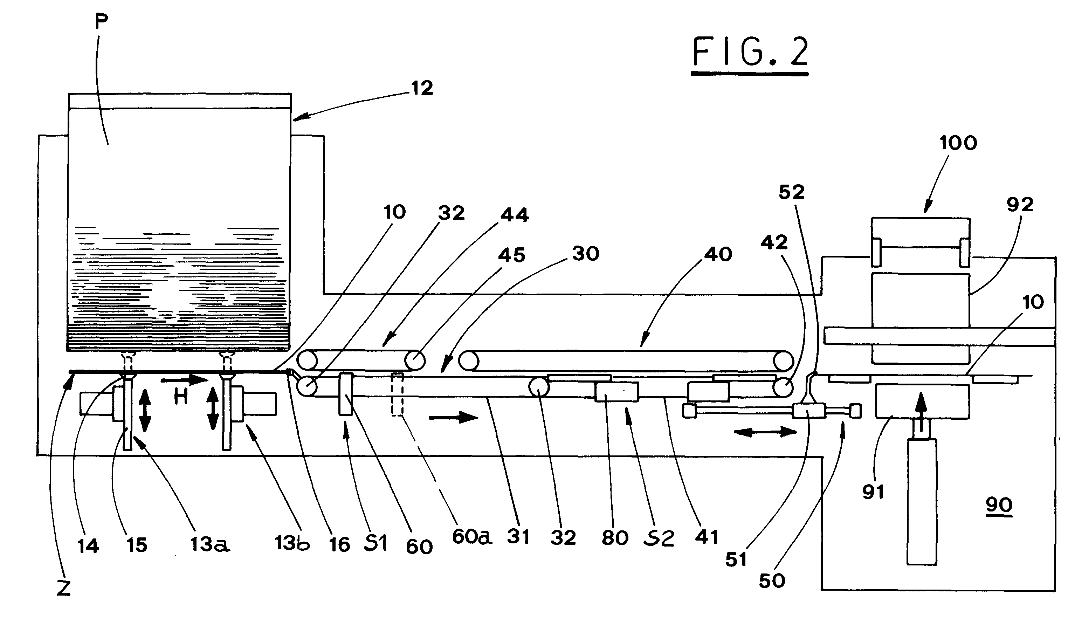

With reference to Fig. 2, a magazine, containing a pack P of said blanks 10 in almost vertical position, is indicated with 12.

Known elastic means of the magazine, which support and allow withdrawal of the base blank from the magazine, are not illustrated.

A pair of gripping devices 13a,13b, operated in suitable mutual time relation, are situated in front of the base of the blanks pack.

The gripping means 13a,13b include respectively suction cup means 14 carried by relative actuator means 15, e.g. pneumatic jacks.

The actuator means 15 translate the suction cups 14 from a position, in which they hold the base blank of the pack P and which is indicated with broken line in fig. 2, and a withdrawing position in the region of a station Z, in which the blank is kept in perfect vertical position by suitable stop means, not shown.

In this station Z, the blank 10 is caught by suitable pliers 16, which translate it in direction H.

First, second and third conveying means 30, 40 and 50 convey the blank 10, still maintained in perfect vertical position, to a final forming station 100.

During this convey, the blank 10 passes through a first and a second intermediate forming station S1, S2, in which stiffening elements 20 of the box container are formed, as will be explained in the following.

Completion of the box container, indicated with 100, takes place in the final station 90.

The first conveying means 30 are made up of a close-loop chain 31, which turns around respective sprockets 32 having vertical axes.

The pliers 16, of known type and known opening and closing operation technique, are fastened to this chain 31.

The chain 31 is driven in time relation with the positioning of a blank in the station Z; in particular the pliers 16 are activated when they are situated near the front edge of the blank, so as to grip it.

The second conveying means 40 are formed by a pair of identical chains 41, arranged on both sides of the chain 31 of the first conveying means 30 and moving with the same speed as said chain 31.

The close-loop chains 41 turn around respective sprockets 42 having vertical axes. The rear sprockets 42 are coaxial with the corresponding sprocket 32 of the chain 31 of the first conveying means 30.

The chains 41 are much longer than the chain 31 of the first conveying means 30.

Respective lugs, not illustrated, fastened to the chains 41 and operating on the same vertical plan, are so positioned with respect to the pliers 16 as to intercept the rear edge of the blank 10.

When near the front head of the chain 31, the pliers 16 are deactivated, so from this point, the blank 10 is translated by pushing action of the lugs.

The third conveying means 50 are made up of a slide 51, equipped with at least one lug 52 and moving, in known, not shown way, between a rear station and a fore station.

The slide 51 is operated in time relation with said second conveying means 40, so as to push the blank 10 to the final forming station 90.

Further pairs of chains 44, following a closed loop path and mounted on relative sprockets 45 with vertical axes, are situated beside the chains 41, in the region of the stations S1 and S2.

These chains 44 are moved with the same speed as the chains 31,41 of the first and second conveying means 30,40.

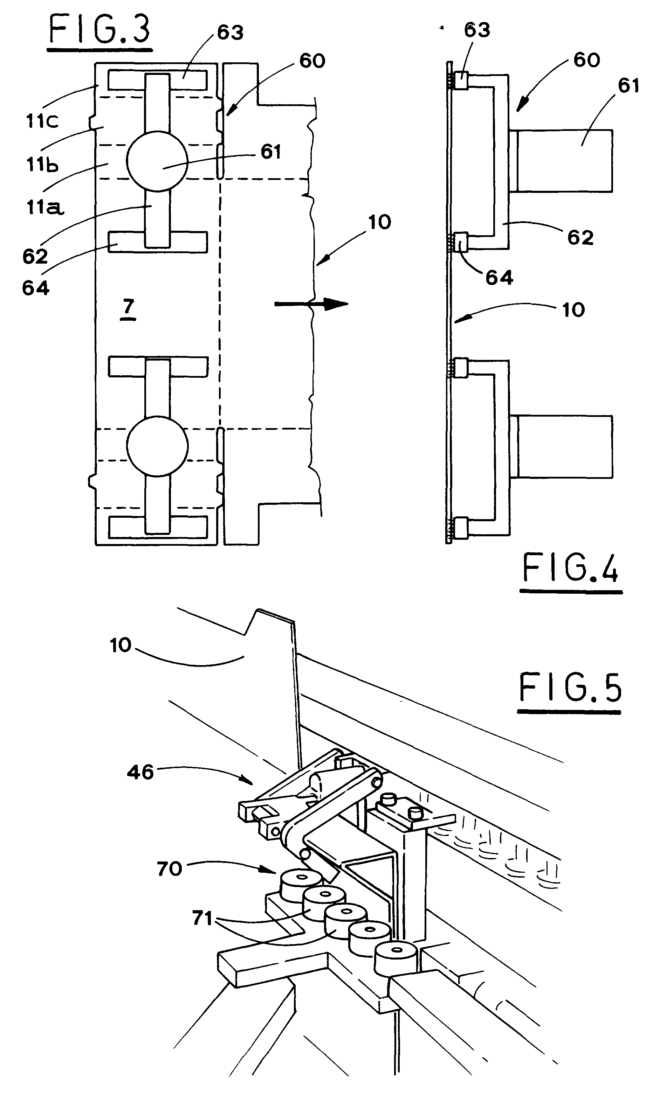

Handling means 46, seen in fig. 5, fastened to the chains 44, fold the flaps 11 a, 11 b and 11 c of the folds 9 so as to obtain the tubular stiffening elements 20, as described and illustrated in the Patent Applications BO92A 000170, BO92A 000302 of the same Applicant.

As seen in detail in figs. 3 and 4, the station S1 features a pair of first heating means 60, which heat the flaps 11c and corresponding areas of the heads 7 to a predetermined temperature, so that they can be joined to each other by heat-welding.

These first heating means 60 feature respectively a heating body 61, that supplies a flow of hot air, and which is connected to a tubular arm 62.

The tubular arm 62 is folded, so that it assumes substantially a U-form, and is provided, at its extremities, with two nozzles 63, 64 for delivering this flow of hot air.

The shape of the nozzles 63, 64 substantially corresponds to the form of the area to heat, in particular extends according to the shape of the flaps 11c.

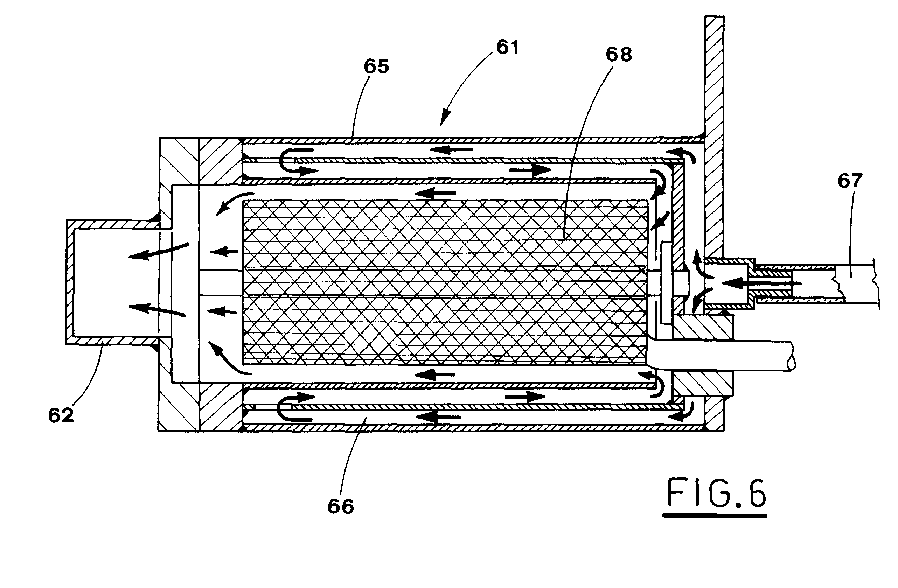

Figure 6 shows a possible embodiment of the above mentioned heating body 61.

This heating body 61 includes a case 65, of e.g. cylindrical shape, defining a labyrinth-like path 66, along which the air to be heated passes, delivered by an axial pipe 67.

The delivered flow of air passes through a resistor 68, situated inside the case 65.

The heated air is let into the tubular arm 62, transversally integral with the front head of the case 65.

The aforementioned handling means 46, situated downstream of the first heating means 60, in the station S, draw the flaps 11c to touch the corresponding heated areas of the heads 7.

Presser means 70, co-operating with the handling means 46, include a series of rollers 71, which press the blank while passing nearby.

These rollers 71 press uniformly said flaps 11c drawn close to the heads 7, for a predetermined time, sufficient for them to join each other by heat-welding.

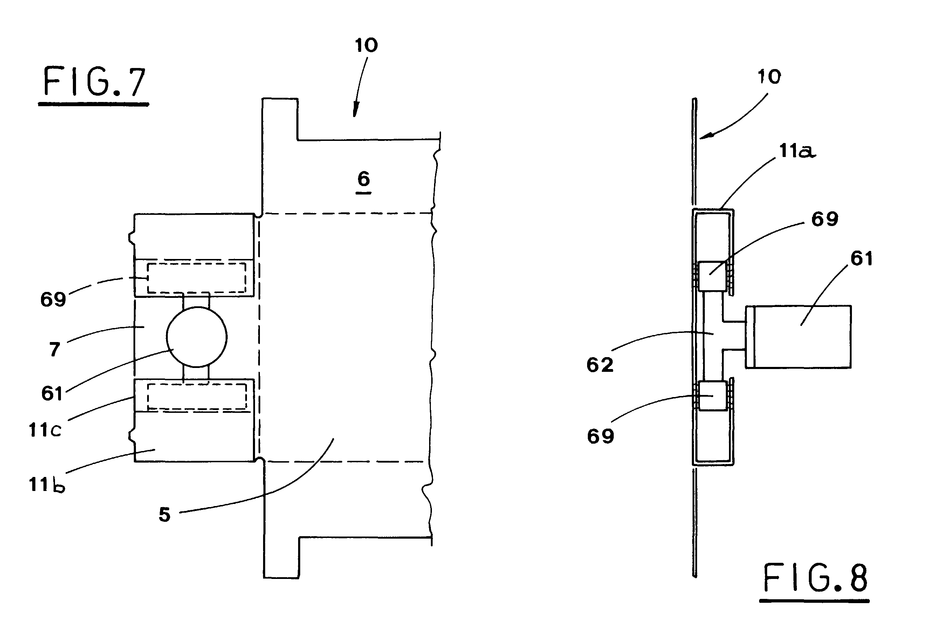

Otherwise, the aforementioned first heating means 60 may include a single heating body 61, that feeds a pair of bilateral nozzles 69, through a T-shaped tubular arm 62, as shown in figures 7 and 8.

The bilateral nozzles 69 heat simultaneously the outer flaps 11c and the corresponding areas of the heads 7, for their subsequent heat-welding.

The flaps 11c are folded so as to face the heads 7.

In practice, in this case, first the flaps 11b, 11c are folded to form a right angle with the internal flaps 11a and then, these internal flaps 11a are folded perpendicularly to the blank 10.

In this way, the outer flaps 11c face the heads 7.

The folding of the flaps 11b, 11c, in order to form tubular elements 20, is completed after the heating step.

In this case, the heating means 60 are suitably situated in the position indicated with broken line 60a in fig. 2, moved downstream with respect to the prior case, to allow the previous folding steps.

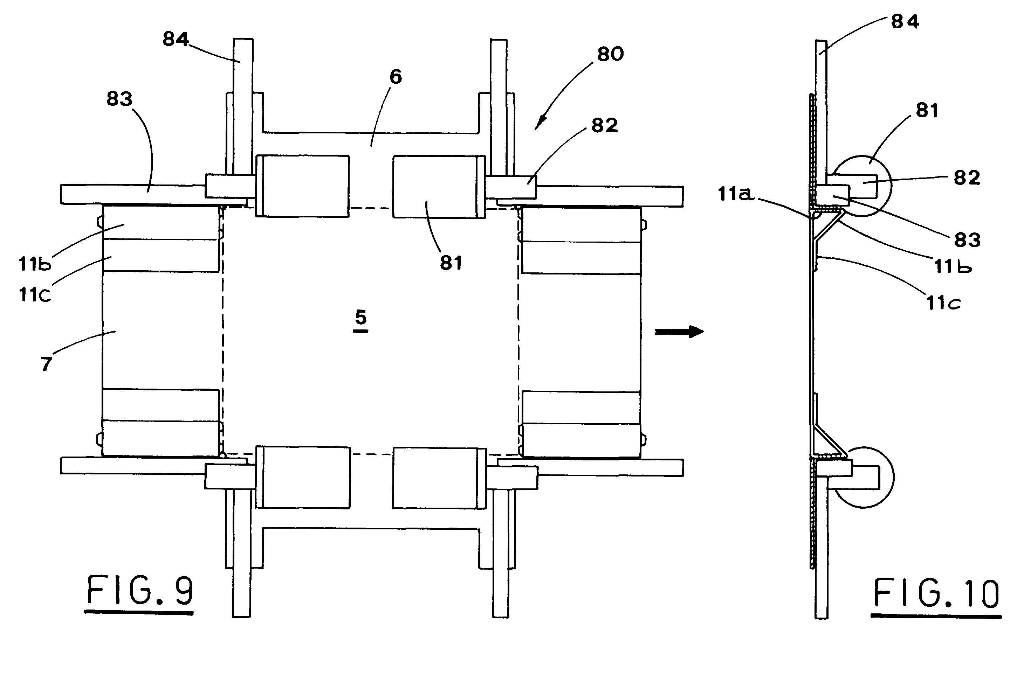

As shown in figures 9 and 10, the station S2 is equipped with second heating means 80, that heat the flaps 11a and the corresponding areas of the sides 6 to the predetermined temperature, so that they can be heat-welded.

Preferably, four heating elements 80 are arranged symmetrically so as to act on the corresponding blank corners, in other words, to heat-weld the relative stiffening elements 20.

These second heating means 80 include a heating body 81 supplying a flow of hot air, of the same type as the heating body of the first heating means 60.

The heating body 81 is connected to a tubular arm 82, which feeds a pair of nozzles 83, 84, arranged at a right angle one with respect to the other and delivering said flow of air.

In particular, the nozzles 83 heat the previously folded flaps 11a, while the nozzles 84 act on the relative lateral areas of the sides 6, still flat with respect to the bottom 5 of the blank.

A pusher 91, situated in the final forming station 90, acts on the bottom 5 of the blank 10, so as to introduce it inside a kind of a funnel-shaped folding element 92, for forming a box container 100.

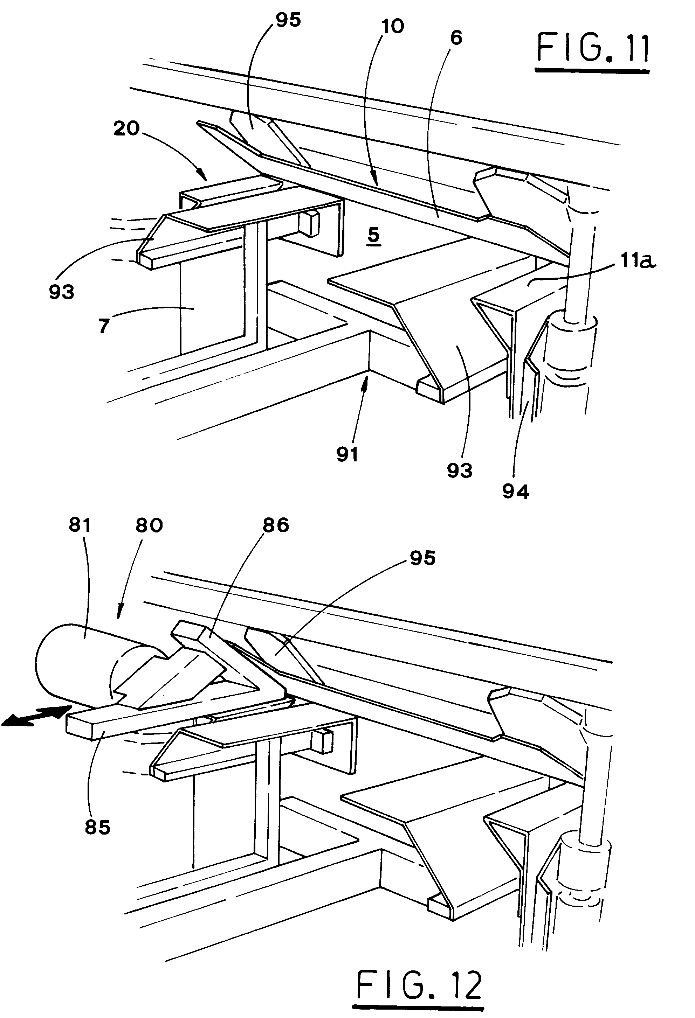

With reference to figure 11, the pusher 91 includes suitably angle shaped plates 93, on which the heads 7 rest during the folding step carried out by stationary stops 94 of the aforementioned folding funnel-shaped element 92.

Each of these angle shaped plates 93 features an inclined surface, on which a corresponding stiffening tubular element 20 rests.

The funnel-shaped element 92 features other stationary stops 95, which fold the sides 6 of the blank.

The sides 6 strike on the angle shaped plates 93, so that their heated lateral areas contact the flaps 11 a of the tubular elements 20 for their heat-welding.

In practice, the movement of the pusher 91 folds the heads 7 of the blank, previously provided with the stiffening tubular elements 20, with respect to the bottom 5; subsequently, the same movement folds the sides 6 so that the internal flaps 11 a of the tubular elements 20 are drawn near the aforementioned lateral areas of the sides 6, previously heated by the second heating means 80.

In this way, the sides 6 are heat-welded to the inner flaps 11a of the tubular element 20 of the box container.

Otherwise, the aforementioned heating means 80 may move longitudinally with respect to the machine, so as to engage the final forming station 90, in suitable time relation with the pusher 91, as shown in Figure 12.

The heating means 80 move between a fore working position and a rear position, in which they are disengaged from the station 90.

In this case, the heating means 80 feature a pair of nozzles 85,86 inclined one with respect to the other at the same angle as the one defined by the stationary stops 95.

In particular, the nozzles 85 heat the flaps 11a previously folded, while the nozzles 86 work on relative lateral regions of the sides 6 brought, by activation of the pusher 91, to abut on stationary stops 95.

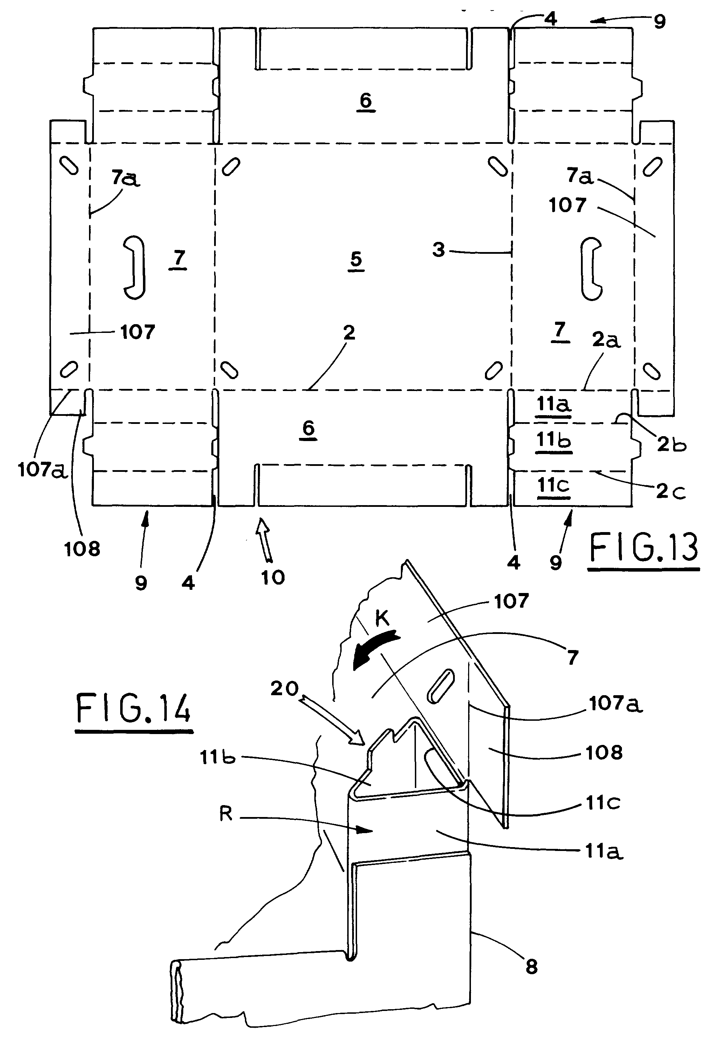

Each of the heads 7 of the blank illustrated in Fig. 13 has articulated thereto, by a relative transversal creasing line 7a, a tab 107.

Winglets 108 are articulated to the ends of the tab 107 by longitudinal creasing lines 107a situated on the level of the longitudinal creasing lines 2a.

After the stiffening tubular elements 20 have been defined, the tabs 107 are turned, in suitable time relation, inward (arrow K, Fig. 14) and the winglets 108 are turned downward until they match the upper parts R of the correspondent external flaps 11a.

The above described folding takes place in the final forming station 90 in suitable time relation with the box container forming.

Before being folded, the winglets 108 and the aforementioned parts R, in the region of their portions to be joined, are heated by suitable heating means (not shown).

Pressure matching of these surfaces, obtained by using suitable folding means (not shown), determines mutual heat-welding of the winglets 108 and the aforementioned parts R.

As has been already stated, the heating can be carried out upstream of the final forming station 90 or in the region thereof.

The proposed machine produces, in best way, box containers equipped with suitable stiffening angular elements, from a blank of synthetic resin.

The box containers are produced without use of other materials, such as glue and the like, which results in considerable advantage for recycling, that becomes easy and convenient.

This leads to bigger production cheapness, as well as improvement of the container aesthetic characteristics.

Moreover, the uniform and very close union of the heat-welded parts further increases the containers overall strength.

An important feature of the machine is its high production capacity and small dimensions.

It is understood that what above, has been described as a mere, not limitative example, therefore possible variants resulting from practice and use are protected by the present invention as described above and claimed hereinafter.

## Claims

1. Machine for producing box containers obtained from flat blanks (10) of synthetic resin, said blanks featuring:
longitudinal (2) and transversal creasing lines (3), transversal (4) splits forming a bottom (5), sides (6), and front and back heads (7) of a box container (100), as well as four folding portions (9) pairs of which are connected to said heads (7) by longitudinal creasing lines (2a), with each folding portion (9) having two longitudinal creasing lines (2b,2c) which define three subsequent flaps (11a,11b,11c), inner, central and outer, respectively, with said machine including:
a magazine (12) for a pack (P) of blanks (10);
gripping means (13a,13b) for intermittent transferring a base blank (10) of the pack (P) to a withdrawing station (Z) ;
conveying means (30,40,50), which transport the blank (10) from said withdrawing station (Z) to a final forming station (90) through at least one intermediate station (S1);
handling means (46), located in the intermediate station (S1), which fold said flaps (11a,11b,11c) of said folding portions (9) along relative creasing lines (2a,2b,2c), with said outer flaps (11c) drawn close to said corresponding areas of the front and back heads (7), so as to form relative stiffening tubular elements (20);
heating means (60), featuring a heating body (61) and located in the intermediate station (S1), provided for supplying a flow of hot air and raising the temperature of the outer flaps (11c) of the folding portions (9) and corresponding areas of the front and back heads (7) of said blank (10) to a predetermined value;
presser means (70), which press said outer flaps (11c) drawn close to corresponding areas of the front and back heads (7) by said handling means, so as to join them by heat-welding
said device being ***characterised in that*** said heating body (61) include a case (65), defining a labyrinth-like path (66) along which the air to be heated passes, and featuring inside a resistor (68), through which said flow of air passes.

2. Machine, according to claim 1, ***characterised in that*** said heating body (61) is connected to a tubular arm (62) equipped with at least one pair of nozzles (63,64), whose shape substantially corresponds to the shape of areas to be heated and which emit said flow of air.

3. Machine, according to claim 1, ***characterised in that*** said first heating means (60) feature respectively a heating body (61), which supplies a flow of hot air and is connected to a tubular arm (62) equipped with one pair of nozzles (69), extending from both sides thereof, which emit the aforementioned flow of air so as to heat simultaneously the outer flaps 11c folded in such a way as to face the front and back heads (7).

4. Machine, according to claim **1**, ***characterised in that*** it includes second heating means (80), working in a second intermediate station (S2), situated downstream of said first intermediate station (S1), and raising the temperature of the inner flaps (11a) and corresponding lateral areas of the sides (6) of said blank (10) to a predetermined value.

5. Machine, according to claim 4, ***characterised in that*** said second heating means (80) feature respectively a heating body (81), which supplies a flow of hot air and is connected to a tubular arm (82) equipped with a pair of nozzles (83,84), arranged at a right angle one with respect to the other and which emit the aforementioned flow of air in the region of a relative inner flap (11a), previously folded, and of a relative lateral area of said side (6), flat with respect to said bottom (5) of the blank (10).

6. Machine, according to claim 4, ***characterised in that*** said second heating means (80) move longitudinally between a fore working position, in the region of a final forming station (90), and a rear position, in which these heating means (80) are disengaged from said station (90), and in that said heating means (80) are equipped with a pair of nozzles (85,86), emitting a flow of hot air and arranged at a right angle one with respect to the other for heating respectively said inner flaps (11a), previously folded and relative lateral areas of said sides (6); brought by activation of a pusher (91) working in said station (90) to abut on stops (95).

7. Machine, according to claim 1, ***characterised in that*** said presser means (70) are provided with a series of rollers (71) which press the blank (10) while passing nearby.

## Patentansprüche

1. Vorrichtung zur Herstellung von Verpackungsbehältern aus Zuschnitten (10) aus Kunstharz, wobei diese Zuschnitte gekennzeichnet sind durch:
longitudinal (2) und transversal (3) verlaufende Faltlinien, transversale Schlitze (4), die einen Boden (5) bilden, Seitenflächen (6) und Vorder- und Rückseitenabdeckungen (7) eines Vorratsbehälters (100) sowie vier Faltbereiche (9), die paarweise mit den genannten Abdeckungen (7) über longitudinale Faltlinien (2a) verbunden sind, wobei jeder Faltbereich (9) zwei longitudinale Faltlinien (2b, 2c) aufweist, die drei zusammenhängende Klappen (11a, 11b, 11c), und zwar eine innere, eine mittlere und eine äußere, bilden, wobei die genannte Vorrichtung folgendes umfaßt:
ein Magazin (12) für einen Stapel (P) von Zuschnitten (10);
Greifmittel (13a, 13 b) zum periodischen Weitertransport eines Zuschnitts (10) vom Stapel (P) zu einer Entnahmestation (Z),
Fördermittel (30, 40, 50), die die Zuschnitte (10) von der genannten Entnahmestation (Z) über wenigstens eine Zwischenstation (S1) zu einer abschließenden Formgebungsstation (90) transportieren;
Handhabungsmittel (46), die an der genannten Zwischenstation (81) angeordnet sind und die die genannten Klappen (11a, 11b, 11c) der genannten Faltbereiche (9) entlang zugeordneter Faltlinien (2a, 2b, 2c) falten, wobei die genannten äußeren Klappen (11c) an die genannten zugeordneten Bereiche der Vorder- und Rückseitenabdeckungen (7) herangezogen werden, um auf diese Weise entsprechende rohrförmige Verstärkungselemente (20) zu bilden;
eine Heizeinheit (60), die einen Heizkörper (61) umfaßt, die in der Zwischenstation (S1) angeordnet ist und die geeignet ist, einen Strom heißer Luft zu erzeugen und die Temperatur der äußeren Klappen (11c) der Faltbereiche (9) und der zugeordneten Bereiche der Vorder- und Rückseitenabdeckungen (7) des genannten Zuschnitts (10) auf einen vorgegebenen Wert zu erhöhen,
Anpreßmittel (70), die die genannten äußeren Klappen (11c), die von den genannten Handhabungsmitteln (46) an die genannten zugeordneten Bereiche der Vorder- und Rückseitenabdeckungen (7) herangezogen sind, anpressen, um diese mittels Schmelzschweißen zu verbinden,
***dadurch gekennzeichnet, daß*** der genannte Heizkörper (61) ein Gehäuse (65) mit einem labyrinthartigen Pfad (66) umfaßt, durch den die zu erhitzende Luft geleitet wird und der einen Widerstandskörper (68) aufweist, durch den der genannte Luftstrom fließt.

2. Vorrichtung gemäß Anspruch 1, ***dadurch gekennzeichnet, daß*** der genannte Heizkörper (61) mit einem röhrenförmigen Arm (62) mit wenigstens einem Paar Düsen (63, 64) verbunden ist, deren Form im wesentlichen der Form der zu erhitzenden Bereiche entspricht und aus denen der Luftstrom austritt

3. Vorrichtung gemäß Anspruch 1, ***dadurch gekennzeichnet, daß*** die genannte erste Heizeinheit (60) jeweils einen Heizkörper (61) aufweist, der einen Strom heißer Luft erzeugt und der mit einem röhrenförmigen Arm (62) verbunden ist, der mit einem Düsenpaar (69) ausgestattet ist, das sich zu dessen beiden Seiten erstreckt und aus dem der vorgenannte Luftstrom austritt, um gleichzeitig die äußeren Klappen (11c) zu erhitzen, die derart gefaltet sind, daß sie an den Vorder- und Rückseitenabdeckungen (7) anliegen.

4. Vorrichtung gemäß Anspruch 1, ***dadurch gekennzeichnet, daß*** sie eine zweite Heizeinheit (80) aufweist, die in einer zweiten Zwischenstation (S2) arbeitet, die stromabwärts der genannten ersten Zwischenstation (S1) angeordnet ist und die die Temperatur der inneren Klappen (11a) und der zugeordneten lateralen Bereiche der Seitenflächen (6) des genannten Zuschnitts (10) auf einen vorgegebenen Wert erhöht.

5. Vorrichtung gemäß Anspruch 4, ***dadurch gekennzeichnet, daß*** die genannte zweite Heizeinheit (80) jeweils einen Heizkörper (81) aufweist, der einen Strom heißer Luft erzeugt und der mit einem röhrenförmigen Arm (82) verbunden ist, der mit einem Paar Düsen (83, 84) ausgestattet ist, die rechtwinklig zueinander angeordnet sind und aus denen der vorgenannte Luftstrom in den Bereich der jeweils zugeordneten, zuvor gefalteten inneren Klappe (11a) sowie in einen zugeordneten lateralen Bereich einer Seitenfläche (6) flach in bezug auf den Boden (5) des genannten Zuschnitts (10) austritt.

6. Vorrichtung gemäß Anspruch 4, ***dadurch gekennzeichnet, daß*** die genannte zweite Heizeinheit (80) sich in Längsrichtung zwischen einer vorderen Arbeitsposition im Bereich einer abschließenden Formgebungsstation (90) und einer rückwärtigen Position bewegt, in der dieses Heizelement (80) von der genannten Station (90) getrennt ist, und daß das Heizelement (80) mit einem Paar Düsen (85, 86) ausgestattet ist, aus denen ein Luftstrom austritt und die rechtwinklig zueinander angeordnet sind, um die genannten zugeordneten, zuvor gefalteten inneren Klappen (11a) sowie einen zugeordneten lateralen Bereich der genannten Seitenfläche (6) zu erwärmen, die durch die Ansteuerung eines in der Station (90) arbeitenden Schiebers (91) an Anschlägen (95) zur Anlage gebracht werden.

7. Vorrichtung gemäß Anspruch 1, ***dadurch gekennzeichnet, daß*** die genannten Anpreßmittel (70) mit einer Reihe von Rollen (71) ausgestattet sind, die auf den Zuschnitt (10) einwirken, wenn dieser den Bereich passiert.

## Revendications

1. Procédé pour fabriquer des récipients en forme de boîtes obtenus à partir de flans plats (10) en résine synthétique, lesdits flans se caractérisant par :
des lignes longitudinales de rainurage (2) et des lignes transversales de rainurage (3), des fentes transversales (4) formant un fond (5), des côtés (6) et des têtes avant et arrière (7) d'un récipient en forme de boîte (100), ainsi que quatre parties de pliage (9), qui sont reliées par paires auxdites têtes (7) par des lignes longitudinales de rainurage (2a), chaque partie de pliage (8) possédant deux lignes longitudinales de rainurage (2b, 2c) qui définissent trois rabats successifs (11a, 11b, 11c), respectivement un rabat intérieur, un rabat central et un rabat extérieur, ladite machine comprenant :
un magasin (12) pour un paquet de flans (10) ;
des moyens de saisie (13a, 13b) pour transférer de façon intermittente un flan de base (10) du paquet (P) à un poste de retrait (Z) ;
des moyens de convoyage (30, 40 50) qui transportent le flan (10) depuis ledit poste de retrait (2) jusqu'à un poste de formage final (90) en passant par au moins un poste intermédiaire (S1) ;
des moyens de manipulation (46) situés dans le poste intermédiaire (S1), qui replient lesdits rabats (11a, 11b, 11c) desdites parties de pliage (9) le long de lignes relatives de rainurage (2a, 2b, 2c), lesdits rabats extérieurs (11c) étant amenés à proximité desdites zones correspondantes des têtes avant et arrière (7) de manière à former des segments tubulaires de renforcement relatifs (20) ;
des moyens de chauffage (60) comprenant un corps de chauffage (61) et disposés dans le poste intermédiaire (S1), prévus pour amener un courant d'air chaud et augmenter la température des rabats extérieurs (11c) des parties de pliage (9) et des zones correspondantes des tètes avant et arrière (7) dudit flan (10) à une valeur prédéterminée ;
des moyens de serrage (70), qui serrent lesdits rabats extérieurs (11c) amenés à proximité des zones correspondantes des têtes avant et arrière (7) par lesdits moyens de manipulation, de manière à les réunir par thermosoudage,
ledit dispositif étant caractérisé en ce que ledit corps de chauffage (61) inclut un boîtier (65) définissant un trajet en forme de labyrinthe (66), le long duquel l'air devant être chauffé circule, et comprenant intérieurement une résistance (68), à travers laquelle ledit courant d'air circule.

2. Machine selon la revendication 1, caractérisée en ce que ledit corps de chauffage (61) est raccordé à un bras tubulaire (62) équipé d'au moins une paire de buses (63, 64), dont la forme correspond essentiellement à la forme de zones devant être chauffées et qui délivrent ledit courant d'air.

3. Machine selon la revendication 1, caractérisée en ce que lesdits premiers moyens de chauffage (60) comprennent respectivement un corps de chauffage (61), qui délivre un courant d'air chaud et est raccordé à un bras tubulaire (62) équipé d'une paire de buses (69), qui s'étend à partir des deux côtés du bras et délivre le courant d'air mentionné précédemment afin de chauffer simultanément les rabats extérieurs (11c) repliés de manière à être situés en vis-à-vis des têtes avant et arrière (7).

4. Machine selon la revendication 1, caractérisée en ce qu'elle comprend des seconds moyens de chauffage (80), qui travaillent dans un second poste intermédiaire (S2), situé en aval dudit premier poste intermédiaire (S1) et augmentent la température des rabats intérieurs (11a) et de zones latérales correspondantes des côtés (6) dudit flan (10) à une valeur prédéterminée.

5. Machine selon la revendication 4, caractérisée en ce que lesdits seconds moyens de chauffage (80) comprennent respectivement un corps de chauffage (81) qui délivre un courant d'air chaud et est raccordé à un bras tubulaire (82) équipé d'une paire de buses (83, 84) disposées à angle droit, l'une par rapport à l'autre et qui délivrent le courant d'air mentionné précédemment dans la zone d'un rabat intérieur relatif (11a) préalablement replié, et d'une zone latérale relative dudit côté (6), plat qui est disposé dans le plan dudit fond (5) du flan (10) .

6. Machine selon la revendication 4, caractérisée en ce que lesdits seconds moyens de chauffage (80) se déplacent longitudinalement entre une position de travail avant, dans la région du poste de formage final (90), et une position arrière, dans laquelle ces moyens de chauffage (80) sont écartés dudit poste (90), et en ce que lesdits moyens de chauffage (80) sont équipés d'une paire de buses (85, 86), qui délivrent un courant d'air chaud et sont disposées à angle droit l'une par rapport à l'autre pour chauffer respectivement lesdits rabats intérieurs (11a), préalablement repliés, et de zones latérales relatives desdits côtés (6), amenées à s'appliquer contre des butées (95) sous l'effet de l'activation d'un poussoir (91) travaillant dans ledit poste (90).

7. Machine selon la revendication 1, caractérisé en ce que lesdits moyens de serrage (70) sont équipés d'une série de rouleaux (71) qui serrent le flan (10) lorsque le flan passe à proximité de ces rouleaux.
